**Europäisches Patentamt**

**European Patent Office**

**Office européen des brevets**

(11) Veröffentlichungsnummer: **0 135 746**
**B1**

(12) # EUROPÄISCHE PATENTSCHRIFT

(45) Veröffentlichungstag der Patentschrift:
16.03.88

(51) Int. Cl.⁴: **G 06 F 9/46**

(21) Anmeldenummer: **84109322.2**

(22) Anmeldetag: **06.08.84**

(54) Verfahren zum schnellen Bearbeiten von Vorgängen mittels einer Unterbrechungssteuerung eines Mikrorechners.

(30) Priorität: **08.08.83 DE 3328576**

(43) Veröffentlichungstag der Anmeldung:
**03.04.85 Patentblatt 85/14**

(45) Bekanntmachung des Hinweises auf die Patenterteilung:
**16.03.88 Patentblatt 88/11**

(84) Benannte Vertragsstaaten:
**AT BE CH DE FR GB IT LI NL SE**

(56) Entgegenhaltungen:
**US-A-4 099 255**

**ELEKTRONIK, Band 30, Nr. 16, August 1981, Seiten 53-60, München, DE; N. WEFERS: "Werkzeuge zur Echtzeitverarbeitung mit Mikrocomputern"
PATENTS ABSTRACTS OF JAPAN, Band 6, Nr. 198, 7. Oktober 1982, Seite 38P147
IBM TECHNICAL DISCLOSURE BULLETIN, Band 17, Nr. 1, Juni 1974, Seite 36, New York, USA; T.L. BRANNON et al.: "Dedicated interval timer"
IBM TECHNICAL DISCLOSURE BULLETIN, Band 14, Nr. 5, Oktober 1971, Seiten 1574-1575, New York, USA; M.J. HARRIS: "Freeing computer CPU's during computer controlled real time operations"**

(73) Patentinhaber: **Siemens Aktiengesellschaft Berlin und München, Wittelsbacherplatz 2, D-8000 München 2 (DE)**

(72) Erfinder: **Widmaier, Hans- Dietrich, Dipl.- Ing., Gräfelfinger Strasse 18, D-8000 München 70 (DE)**

EP 0 135 746 B1

**Beschreibung**

Die Erfindung bezieht sich auf eine Schaltungsanordnung zum schnellen Bearbeiten von Vorgängen mittels einer Unterbrechungssteuerung eines Mikrorechners entsprechend dem Oberbegriff des Patentanspruchs 1.

Aus einem Aufsatz in Elektronik, Band 30, Nr. 16, Aug. 1981, Seiten 53 bis 60 ist es bereits bekannt, einen Programmablauf eines Mikrorechners durch ein Unterbrechungssignal zu unterbrechen, um aufgrund eines äußeren Anreizes ein diesem Anreiz zugeordnetes Programm schnellstmöglich zu bearbeiten. Der äußere Anreiz wird üblicherweise durch ein entsprechendes Zustandssignal dargestellt, das einer mit dem Mikrorechner verbundenen Unterbrechungssteuerung zugeführt wird, um eine Unterbrechung des gerade laufenden Programms zu bewirken. Ein derartiges Zustandssignal kann periodisch abgegeben werden. In diesem Fall ist ein Zeitgeber vorgesehen, der einen Taktimpulse konstanter Folgefrequenz erzeugenden Taktgeber enthält. Es ist auch denkbar, mehrere Signale zu einem Unterbrechungssignal zusammenzufassen, um auf diese Weise auf unterschiedliche Anreize sehr schnell reagieren zu können.

Ein Anwendungsfall ist beispielsweise die Durchführung von vermittlungstechnischen Aufgaben in einer Fernschreibmaschine. In diesem Fall muß die Fernschreibmaschine ständig entsprechende Signale überwachen, um bei einem Verbindungsaufbau zu einem fernen Fernschreibteilnehmer oder einem Verbindungsabbau sofort die entsprechenden Prozeduren durchführen zu können. Zu diesem Zweck wäre es denkbar, an einer Leitungsanpassung, an der die Fernleitung der Fernschreibmaschine angeschlossen ist, einen Mikrorechner anzuordnen, der das Auftreten entsprechender Signale an der Leitungsenpassung überwacht, um dann an ein zentrales Steuerteil in der Fernschreibmaschine ein entsprechendes Signal abzugeben, das die Durchführung der erforderlichen Vorgänge bewirkt. Eine derartige Anordnung hat jedoch den Nachteil, daß sie einen verhältnismäßig großen Aufwend erfordert, da in diesem Fall ausschließlich für die Überwachung der Signale ein Mikrorechner vorgesehen werden muß.

Der Erfindung liegt daher die Aufgabe zugrunde, eine Schaltungsanordnung zum schnellen Bearbeiten von Vorgängen unter Verwendung einer Unterbrechungssteuerung anzugeben, mittels der sichergestellt ist, daß der Mikrorechner sowohl für die schnelle Bearbeitung von über die Unterbrechungssteuerung ausgelösten Vorgängen als auch für eine schnelle Bearbeitung der normalerweise zu bearbeitenden Vorgänge zur Verfügung steht.

Erfindungsgemäß wird die Aufgabe bei der Schaltungsanordnung der eingangs genannten Art durch die im kennzeichnenden Teil des Patentanspruchs 1 angegebenen Merkmale gelöst.

Die Erfindung geht dabei von dem Gedanken aus, daß häufig die sehr schnell zu bearbeitenden Vorgänge im Vergleich zu den übrigen Vorgängen einen verhältnismäßig geringen Zeitaufwand erfordern. Beispielsweise ist bei der Verwendung eines Mikrorechners für die Lösung der vermittlungstechnischen Aufgaben in einer Fernschreibmaschine die zu diesem Zweck erforderliche Zeitdauer sehr gering im Vergleich zu der Zeitdauer, während der sich eine Fernschreibmaschine im Ruhezustand, in einem Lokalbetrieb oder in einem Leitungsbetrieb nach hergestellter Verbindung befindet. Der Mikrorechner wird in diesem Fall nur dann zeitlich zu einem Teil mit den Vermittlungsaufgaben belastet, wenn tatsächlich eine Verbindung auf- oder abzubauen ist. Während der übrigen Zeit kann der Mikrorechner für die übrigen Aufgaben verwendet werden. Die Scheltungsanordnung erfordert aus diesem Grund einen verhältnismaßig geringen Aufwand, da ein weiterer Mikrorechner, der nur die den äußeren Anreizen zugeordneten Signale überwacht, nicht erforderlich ist. Die Schaltungsanordnung het weiterhin den Vorteil, deß eine Selbststeuerung möglich ist. Der Mikrorechner wird in diesem Fall durch die Arbeitsunterbrechungssignale jeweils so stark belastet, wie es für die Bearbeitung der jeweiligen Ereignisse gerede erforderlich ist.

Vorteilhafte Weiterbildungen der Erfindung ergeben sich aus den Unteransprüchen.

Im folgenden wird ein Ausführungsbeispiel der Schaltungsanordnung gemäß der Erfindung anhand von Zeichnungen näher erläutert. Es zeigen:

Fig. 1 ein Blockschaltbild eines Teils einer Fernschreibmaschine, der sich mit dem Aufbau und dem Abbau einer Verbindung zu einem fernen Teilnehmer befaßt,

Fig. 2 ein Schaltbild eines Ausschnitts aus einer Steuereinheit,

Fig. 3 ein Signalbild von Signalen an verschiedenen Punkten der Steuereinheit.

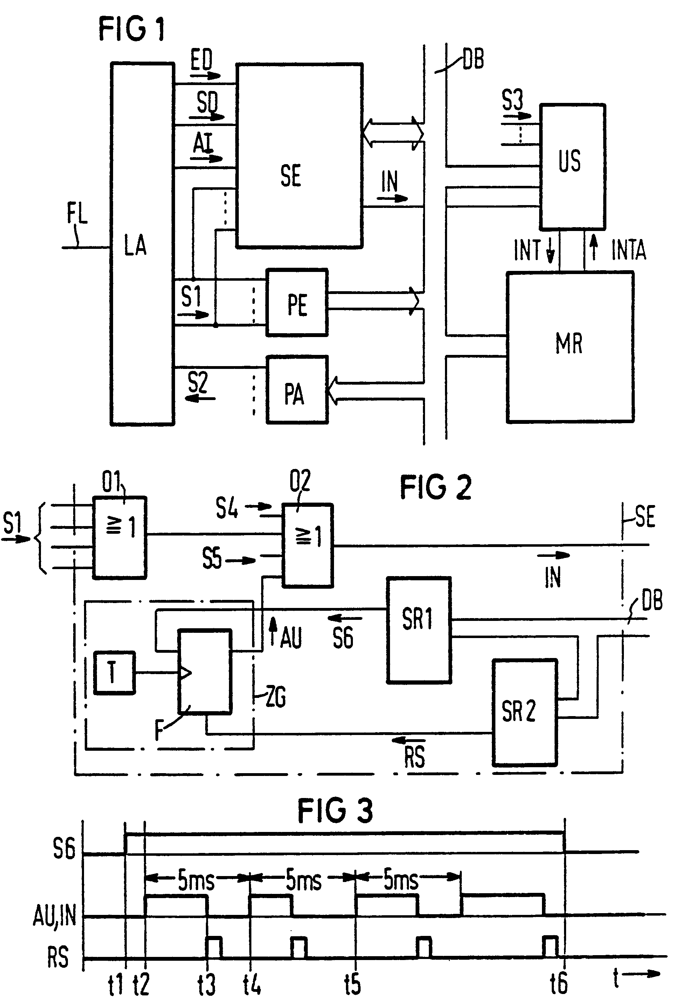

Bei dem in Fig. 1 dargestellten Teil einer Fernschreibmaschine, der sich mit dem Aufbau und dem Abbau einer Verbindung zu einem fernen Teilnehmer befaßt, ist eine Leitungsanpassung LA vorgesehen, an der eine Fernleitung FL angeschlossen ist. Zwischen der Leitungsanpassung LA und der zentralen Steuerung der Fernschreibmaschine werden mehrere Signale übertragen, von denen die Signale S1 und S2 vermittlungstechnische Signale darstellen, während die Signale ED die Empfangsdaten, die Signale SD die Sendedaten und die Signale AI die Abrufimpulse für die Sendedaten SD darstellen. Der Aufbau und der Abbau der Verbindung sowie die Steuerung der Übertragung der Sendedaten SD und der Empfangsdaten ED erfolgt unter Verwendung eines Mikrorechners MR, der in bekannter Weise ausgebildet ist. An dem Mikrorechner MR ist ein Datenbus DB angeschlossen, der seinerseits mit einer Steuereinheit SE, einem Eingabebaustein PE und einem Ausgabebaustein PA verbunden ist. Weiterhin ist an dem Datenbus eine Unterbrechungssteuerung US angeschlossen, die auch über direkte Leitungen mit dem Mikrorechner MR verbunden ist. Die Ein- und Ausgabebausteine PE bzw. PA und die Unterbrechungssteuerung US sind als sogenannte integrierte Port-Schaltkreise im Handel erhältlich.

Der Mikrorechner MR steuert normalerweise, gegebenenfalls gemeinsam mit weiteren Mikrorechnern MR die in der Fernschreibmaschine durchzuführenden Funktionen. Im normalen Programmablauf werden der Lokalbetrieb, der Leitungsbetrieb oder der Ruhezustand bearbeitet. Wenn vermittlungstechnische Vorgänge durchzuführen sind, gibt die Steuereinheit SE ein Unterbrechungssignal IN an die Unterbrechungssteuerung US ab, die dieses in ein Unterbrechungssigngl INT für den Mikrorechner MR umsetzt. Dieser erzeugt seinerseits ein Unterbrechungsbestätigungssignal INTA und gibt dieses an die Unterbrechungssteuerung US ab. Anschließend wird im Unterbrechungsmodus, der auch als Interruptmodus allgemein bekannt ist, ein entsprechendes Unterbrechungsprogramm durchgeführt und die jeweils erforderlichen Vorgänge werden auf diese Weise sehr schnell bearbeitet. An der Unterbrechungssteuerung US können noch weitere Signale S3 anliegen, mit denen ebenfalls ein Unterbrechungszustand erzeugbar ist.

Für vermittlungstechnische Vorgänge sind insgesamt sieben verschiedene Kriterien, die teilweise in den Signalen S1 enthalten sind, zu dem gemeinsamen Unterbrechungssignal IN verknüpft. Fünf dieser Signale reagieren auf Anreize, die über die Fernleitung FL zur Leitungsanpassung LA gelangen und dort in entsprechende Signale S1 umgesetzt werden. Ein Signal hat nur Sicherungsfunktionen und ein weiteres Signal dient als Selbststeuerung des Vermittlungsvorgangs.

Weitere Einzelheiten dieser Selbststeuerung werden im folgenden zusammen mit dem in Fig. 2 dargestellten Schaltbild beschrieben.

Als Folge eines Anreizes von außen wird durch die Signale S1, S4 oder S5 über die ODER-Glieder 01 und/oder 02 das Unterbrechungssignal IN erzeugt und der Unterbrechungssteuerung US zugeführt. Aufgrund dieses Unterbrechungssignals IN prüft der Mikrorechner MR durch Abfrage der Signale S1 über den Eingabebaustein PE und den Datenbus DB, um welche Art von Anreiz es sich handelt. Wenn nur einfache Schritte auszuführen sind, wird der normale Programmablauf des Mikrorechners MR kurzzeitig unterbrochen und im Unterbrechungszustand der jeweilige Vorgang schnell durchgeführt. Wenn es sich jedoch um einen umfangreicheren Vorgang handelt, der den Mikrorechner MR verhältnismäßig stark und über eine längere Zeit beansprucht, gibt der Mikrorechner MR über den Datenbus DB an ein Steuerregister SR1 ein Datenwort ab, bei dem ein Bit an einer vorgegebenen Stelle ein Signal S6 erzeugt, das einen mit einem Flipflop F versehenen Zeitgeber ZG freigibt. Am Takteingang des Flipflops F ist ein Taktgeber T angeschlossen, der Taktimpulse mit einer Periodendauer von beispielsweise 5 ms erzeugt und das Flipflop F jeweils setzt, solange das Signal S6 vorhanden ist. An seinem Ausgang gibt das Flipflop F ein Arbeitsunterbrechungssignal AU ab, das über das ODER-Glied 02 das Unterbrechungssignal IN erzeugt. Das vom Mikrorechner MR im Unterbrechungszustand nun zu bearbeitende Programm ist so ausgebildet, daß es den Mikrorechner MR nicht ständig mit den vermittlungstechnischen Vorgängen belastet sondern nur abschnittsweise. Nach einer vorgegebenen Zeitdauer der Unterbrechungsroutine, die kleiner sein muß als die Periodendauer von 5 ms, gibt der Mikrorechner MR als Folge eines Schreibvorgangs am Ende der Unterbrechungsroutine über ein weiteres Steuerregister SR2 ein Datenwort ab, bei dem ein Bit an einer vorgegebenen Stelle des Datenworts einen Impuls RS bewirkt, der das Flipflop F zurücksetzt. Nach der Periodendauer von 5 ms wird das Flipflop F erneut gesetzt, so daß wieder ein Unterbrechungssignal IN erzeugt wird. Auch dieses Signal wird durch ein erneutes Rücksetzsignal RS beendet, wobei das Zurücksetzen vor dem Ablauf der Periodendauer von 5 ms erfolgen muß, um in der verbleibenden Zeit den Mikrorechner MR mit anderen Aufgaben zu befassen.

Bei den in Fig. 3 dargestellten Zeitdiagrammen sind in Abszissenrichtung die Zeit t und in Ordinatenrichtung Signale an verschiedenen Punkten der Schaltungsanordnung dargestellt.

Zum Zeitpunkt t1 wird angenommen, daß über das Steuerregister SR1 das Signal S6 erzeugt wird, so daß zum Zeitpunkt t2, wenn der Taktgeber T einen entsprechenden Taktimpuls abgibt, das Flipflop F gesetzt wird und ein entsprechendes Arbeitsunterbrechungssignal AU bzw. Unterbrechungssignal IN an die Unterbrechungssteuerung US abgegeben wird. Der Mikrorechner MR wird nun in seinen Unterbrechungszustand gebracht und das erforderliche Programm wird mindestens teilweise bearbeitet. Programmgesteuert wird zum Zeitpunkt t3 über das Schieberegister SR2 das Rücksetzsignal RS erzeugt, das das Flipflop F zurücksetzt und damit das Arbeitsunterbrechungssignal AU bzw. das Unterbrechungssignal IN beendet und den Mikrorechner MR wieder in den normalen Programmzustand zurückbringt.

Nach der Periodendauer der vom Taktgeber T abgegebenen Taktimpulse wird zum Zeitpunkt t4 das Flipflop F erneut gesetzt und zwischen den Zeitpunkt t4 und t5 wiederholen sich ähnliche Vorgänge wie zwischen den Zeitpunkten t2 und t4. Die Zeitdauer, nach der das Flipflop F jeweils zurückgesetzt wird, hängt von dem jeweils im Unterbrechungsmodus zu bearbeitenden Programm ab. Wenn zum Zeitpunkt t6 alle vermittlungstechnischen Vorgänge bearbeitet sind, gibt der Mikrorechner MR über den Datenbus DB an das Steuerregister SR1 ein Datenwort ab, das das Signal S6 beendet und damit ein erneutes Setzen des Flipflops F verhindert. Von nun an befindet sich der Mikrorechner MR solange im normalen Programmzustand, bis ein weiteres Unterbrechungssignal IN auftritt.

Die Schaltungsanordnung kann nicht nur für die Bearbeitung vermittlungstechnischer Vorgänge in Fernschreibmaschinen verwendet werden, sondern allgemein in Anordnungen, in denen sehr schnell auf äußere Anreize reagiert werden muß, ohne die Bearbeitung eines normalerweise durchzuführenden Programm zu vernachlässigen.

**Patentansprüche**

1. Schaltungsanordnung zum schnellen Bearbeiten von Vorgängen mittels einer Unterbrechungssteuerung (US) eines Mikrorechners (MR), bei der mindestens ein externes Signal (S1, S4, S5) eine Unterbrechung eines gerade vom Mikrorechner (MR) bearbeiteten Programms und eine Bearbeitung eines dem externen Signal (S1, S4, S5) zugeordneten Programms in einem Unterbrechungsmodus auslöst und bei der in einer Steuereinheit (SE) ein Zeitgeber (ZG) vorgesehen ist, der einen Taktimpulse konstanter Folgefrequenz abgebenden Taktgeber (T) enthält und der nach dem Auftreten eines Unterbrechungssignales (IN) programmgesteuert eingeschaltet wird und nach jeweils einer vorgegebenen Zeitdauer Arbeitsunterbrechungssignale (AU, IN) an den Mikrorechner (MR) abgibt, dadurch gekennzeichnet, daß der Zeitgeber (ZG) ein Plipflop (F) enthält, das durch ein vom Mikrorechner (MR) abgegebenes erstes Datenwort freigegeben wird, an dessen Takteingang die Taktimpulse anliegen, das durch vom Mikrorechner (MR) abgegebene zweite Datenwörter jeweils zurückgesetzt wird und das an seinem Ausgang die Arbeitsunterbrechungssignale (AU, IN) zur Selbststeuerung in den Unterbrechungsmodus an den Mikrorechner (MR) abgibt.

2. Schaltungsenordnung nach Anspruch 1, dadurch gekennzeichnet, daß die Datenwörter in Steuerregistern (SR1, SR2) eingespeichert werden, von denen jeweils ein Ausgang mit einem Freigabeeingang bzw. einem Rücksetzeingang des Flipflops (F) verbunden ist.

3. Schaltungsanordnung nach einem der Ansprüche 1 oder 2, dadurch gekennzeichnet, daß das Arbeitsunterbrechungssignal (AU) bzw. das Unterbrechungssignal (IN) bei der Durchführung vermittlungstechnischer Vorgänge in Fernschreibmaschinen erzeugt werden.

**Claims**

1. A circuit arrangement for rapidly processing procedures by means of an interrupt control unit (US) of a microcomputer (MR), in which at least one external signal (S1, S4, S5) triggers an interruption in a programme currently being processed by the microcomputer (MR) and triggers the processing, in an interrupt mode, of a programme assigned to the external signal (S1, S4, S5), and in which a control unit (SE) is provided with a timer (ZG) which includes a clock generator (T) which emits clock pulses of a constant repetition frequency, and which following the occurrence of an interrupt signal (IN) is switched on in programme-controlled fashion and at the end of a predetermined interval of time emits operation interrupt signals (AU, IN) to the microcomputer (MR), characterised in that the timer (ZG) includes a flip-flop (F) which is released by a first data word emitted from the microcomputer (MR), at whose clock input the clock pulses occur, which is in each case reset by second data words emitted by the microcomputer (MR), and which, at its output, supplies the microcomputer (MR) with the operation interrupt signals (AU, IN) for automatic control into the interrupt mode.

2. A circuit arrangement as claimed in claim 1, characterised in that the data words are input into control registers (SR1, SR2), the respective outputs of which are connected to a release input and a reset input respectively of the flip-flop (F).

3. A circuit arrangement as claimed in one of the claims 1 or 2, characterised in that the operation interrupt signal (AU) and the interrupt signal (IN) are produced in the case of the execution of switching procedures in teleprinters.

**Revendications**

1. Montage pour traiter rapidement des processus au moyen d'un dispositif de commande d'interruption (US) d'un micro-ordinateur (MR) et dans lequel au moins un signal extérieur (S1, S4, S5) déclenche une interruption d'un programme traité précisément par le micro-ordinateur (MR) et un traitement d'un programme associé au signal extérieur (S1, S4, S5) selon un mode d'interruption et dans lequel dans une unité de commande (SE) il est prévu une horloge (ZG) qui contient un générateur de cadence (T) délivrant des impulsions de cadence à une fréquence de récurrence constante et qui est branchée, d'une manière commandée par programme, après l'apparition d'un signal d'interruption (IN) et délivre, au bout d'un intervalle de temps prédéterminé, des signaux d'interruption de travail (AU, IN) au micro-ordinateur (MR), caractérisé par le fait que l'horloge (ZG) contient une bascule bistable (F), qui est libérée par un premier mot de données délivré par le micro-ordinateur (MR) et à l'entrée de cadence de laquelle sont appliquées les impulsions de cadence, et qui est ramenée respectivement à l'état initial par des seconds mots de données délivrés par le micro-ordinateur (MR) et dont la sortie envoie les signaux d'interruption de travail (AU, IN) au micro-ordinateur (MR), pour la commande automatique dans le mode d'interruption.

2. Montage suivant la revendication 1, caractérisé par le fait que les mots de données sont mémorisés dans des registres de commande (SRI, SR2), dont une sortie est reliée respectivement à une entrée de libération ou à une entrée de remise à l'état initial de la bascule bistable (F).

3. Montage suivant l'une des revendications 1 ou 2, caractérisé par le fait que le signal d'interruption de travail (AU) ou le signal d'interruption (IN) est produit lors de l'exécution de processus de la technique de commutation dans des télescripteurs.

# FIG 1

# FIG 2

# FIG 3